# EUROPÄISCHE PATENTANMELDUNG

(11) **EP 1 244 315 A1**
(43) Veröffentlichungstag der Anmeldung: **25.09.2002**
(21) Anmeldenummer: 01107189.1
(22) Anmeldetag: 22.03.2001
(51) Int. Cl.: H04Q 3/00

(54) **Verfahren zur selektiven und gesammelten Weiterleitung von Meldungen in einem TMN-Netzwerk**

(71) Anmelder: SIEMENS AKTIENGESELLSCHAFT, 80333 München (DE)
(72) Erfinder: Burger, Alan, Dr., 82407 Wielenbach (DE)

(57) **Zusammenfassung**

Die Erfindung betrifft ein Verfahren und eine Vorrichtung zur selektiven und/oder zeitlich verzögerten und gesammelten Weiterleitung von Meldungen (14) in einem TMN-System, das nach den Richtlinien der ITU-T verwaltet wird. Dazu wird als eine Objektklasse ein MassEventDiscriminator (18) definiert und ein MassEventPreprocessor (20) leitet unter Zugriff auf den MassEventDiscriminator (18) ausschließlich die Meldungen (14) von einem Netzelement (10) an ein Operationssystem (16) weiter, die einen Informationsgewinn für das Management des Systems bergen.

## Beschreibung

Die Erfindung liegt auf dem Gebiet der Netzwerktechnik, die auf der TMN-Architektur (Telecommunication Management Network) aufbaut. Das Telecommunication Management Network (TMN) ist ein Managementkonzept für innovative Telekommunikationsanwendungen und soll die üblichen Managementanforderungen unterstützen. Es ist konzeptionell ein eigenes Netzwerk, das verschiedenste Schnittstellen enthält zu dem Netzwerk, das kontrolliert und gesteuert werden soll. Es wurde von einer Studiengruppe der ITU-T (Sektor für Standardisierung der internationalen Fernmeldeunion ITU - International Telecommunication Network, früher CCITT) entwickelt und basiert auf dem ISO-OSI-Referenzmodell. TMN verfolgt ein standardisiertes Management von Telekommunikationsnetzen und den darauf aufbauenden Diensten aller Art.

Der verstärkte Bedarf nach Standardisierung erklärt sich durch die steigende Liberalisierung des Fernmeldewesens, die insbesondere durch die Auflösung des Monopols für die Telekommunikation gekennzeichnet ist. Von daher wird es notwendig, immer komplexere Netze zu betreiben und herstellerunabhängige Managementwerkzeuge bereitzustellen, die sowohl neue Dienste berücksichtigen als auch die Trennung zwischen Netzbetreiber und Dienstanbieter berücksichtigen.

Das TMN besteht aus verschiedenen physikalischen Elementen und deren (Datenmodellierungs-)Abstraktionen.
Ein Netzführungseinrichtung, das sogenannte Operationssystem stellt den zentralen Kern dar und kommuniziert über Schnittstellen, insbesondere über die Schnittstellen Q₃ bis Qₓ, mit Netzelementen.

Netzelemente sind physikalische Einheiten des Netzes, z.B. ein Telefonvermittlungssystem, und kann mehrere physikalische Einrichtungen beinhalten, wie Übertragungsgeräte (z.B. Multiplexer,SDH etc.), Leitungseinrichtungsrechner, Peripherie etc.
Ein sogenanntes Managed Object ist eine Abstraktion der realen Ressource und erfaßt ausschließlich die Managementaspekte der realen Ressource. Ein Managed Object wird durch seine Attribute, die auf ihm ausgeführten Operationen, die von ihm gesendeten Meldungen und die Relationen zu anderen Managed Objects beschrieben.

Ein Objektmodell ist eine Abstraktion von durch das TMN verwalteten Ressourcen und kann insbesondere als Sammlung mehrere Managed Objects definiert werden.

Die Erfindung betrifft insbesondere ein Verfahren zur Weiterleitung von Meldungen, die zumindest ein Ereignis bei der Betriebsführung eines Telekommunikationsnetzwerkes bzw. bei der Übertragung von Einheiten in einem solchen Netzwerk repräsentieren, das nach den ITU-T Empfehlungen verwaltet wird.

Nach den ITU-T Richtlinien ist es erforderlich, daß zahlreiche, spontane Berichte von dem Netzelement zu dem Operationssystem weitergeleitet werden müssen. Diese Berichte werden Meldungen genannt und betreffen beispielsweise die Bildung oder Löschung eines Objektes, Alarme, Zustandsänderungen, Änderungen der Beziehungen der Objekte etc. Die Meldungen sind in den ITU-T Richtlinien der X-Serie, insbesondere in X.721, definiert.
Bei den bisherigen Verfahren zum Netzwerkmanagement, die auf den ITU-T Richtlinien basierten, war es deshalb erforderlich, alle Meldungen vollständig an das oder die Operationssysteme weiterzuleiten.
Dies kann nachteiligerweise zu einer Flut von Meldungen führen, nämlich falls ein die Meldung verursachendes Ereignis eine Flut von weiteren Ereignissen auslöst, die ihrerseits wiederum die Herausgabe von Meldungen nach sich ziehen.

Diese Vorgehen erweist sich aus mehreren Gründen als nachteilig.
Zum einen kann das Netz und/oder der Kommunikationskanal überlastet werden. Zum anderen ist es schwieriger, aus der Menge der Meldungen, diejenigen heraus zu filtern, die relevant sind, um das eigentliche Problem zu lösen, nämlich, das System in den normalen Betriebszustand nach einem fehlerhaften Ereignis zurückzuführen.

Aufgabe der vorliegenden Erfindung ist es daher, ein Verfahren, ein Netzwerkmanagementsystem und eine Vorrichtung zur Verfügung zu stellen, das/die nur die Meldungen mit Informationsgewinn in einem Netzwerk, insbesondere einem TMN-Netzwerk, an das Operationssystem weiterleitet und die anderen Meldungen zusammenfaßt und zu einem späteren Zeitpunkt als Paket weiterleitet, ohne, daß das System neu konzeptioniert zu werden braucht.

Diese Aufgabe wird erfindungsgemäß durch das eingangs erwähnte Verfahren gelöst, insbesondere durch ein Verfahren zur Weiterleitung von zumindest einer Meldung, die zumindest ein Ereignis im Rahmen der Betriebsführung eines Telekommunikationsnetzwerkes repräsentiert, mit folgenden Schritten:
- Bestimmen der Meldung,
- Erfassen von Daten, die die Meldung und / oder das zugehörige Ereignis betreffen,
- Klassifizieren der Meldung aufgrund der erfaßten Daten in zumindest eine der beiden Klassen 'nicht verursachend' und 'verursachend'
- Speichern und selektives Weiterleiten der Meldung, indem die Meldung direkt bzw. unmittelbar weitergeleitet wird, falls die Meldung in die Klasse 'verursachend' klassifiziert worden ist und indem andernfalls:
   die Meldung zu einem späteren Zeitpunkt, und insbesondere gesammelt, zusammen mit weiteren Meldungen, weitergeleitet wird.

Ein wesentliche Vorteil des erfindungsgemäßen Verfahrens ist darin zu sehen, daß die Verkehrslast in dem System reduziert werden kann.
Weiterhin ist es möglich, eine Klassifikation von Ereignissen vorzunehmen hinsichtlich deren Wichtigkeit bei der Zurückführung des Systems in den normalen Betriebszustand. Hier können weniger wichtige Meldungen und/oder deren Bearbeitung zurückgestellt werden, um die relevante vorzuziehen und bevorzugt zu bearbeiten. Damit wird Reaktion bzw. die Geschwindigkeit des Systems erhöht.

Nach einer Aufgabenlösung gemäß Anspruch 15 und 16 ist ein Netzwerkmanagementsystem und eine entsprechende Vorrichtung vorgesehen, das/die zur Weiterleitung von zumindest einer Meldung von einem Netzwerkelement zu mindestens einem Operationssystem bestimmt ist, wobei die Meldung zumindest ein Ereignis bei der Betriebsführung eines Telekommunikationsnetzwerkes repräsentiert, das nach den ITU-T Richtlinien verwaltet wird, mit:
- einer Objektklasse, die als Klassifikationseinheit dient und die beschreibt, ob die Meldung in eine Klasse 'verursachend' oder in eine Klasse 'nicht verursachend' klassifiziert werden kann und
- einem Weiterleitungsmittel, das zwischen das Netzwerkelement und das Operationssystem geschaltet ist und das die Meldung selektiv und nur dann unmittelbar an das Operationssystem weiterleitet, wenn die Meldung bzw. das sie auslösende Ereignis in die Klasse 'verursachend' klassifiziert worden ist.

Die bevorzugte Ausführungsform der Erfindung umfaßt zwei Komponenten:
- eine Objektklasse, die von einem Objektmodell umfaßt wird und auf abstrakter Ebene beschreibt, in welche Klasse bzw. Kategorie ein Ereignis fällt und
- eine Softwarekomponente, die alle Meldungen aufgrund der Klassifikation auf unterschiedliche Weise an das Operationssystem weiterleitet.
   Eine erste mögliche Art der Weiterleitung ist die sofortige und einzeln erfolgende Weiterleitung der Meldung an das Operationssystem. Eine zweite Art besteht darin, mehrere Meldungen zusammenzufassen, die nicht sofort übermittelt werden müssen, um sie gemeinsam und zu einem späteren Zeitpunkt weiter zu leiten. Der Zeitpunkt für die Herausgabe der gesammelten Meldungsnachricht kann dabei entweder variable sein oder in vorbestimmten, zyklischen Zeitabständen erfolgen.

Die Erfindung basiert auf folgende Unterteilung bzw. Einordnung der Ereignisse in zwei Kategorien:
1. die Kategorie "verursachend" und
2. die Kategorie "nicht verursachend".
   Dabei wird die erste Kategorie "verursachend" definiert, durch die Ereignisse bzw. durch sie hervorgerufenen Meldungen, die automatisch weitere Ereignisse innerhalb des Netzwerkes auslösen.
   Alle anderen Ereignisse bzw. Meldungen werden in die zweite Kategorie "nicht verursachend" klassifiziert.

In der bevorzugten Ausführungsform der Erfindung wird die zweite Kategorie noch weiter spezifiziert, nämlich durch solche Ereignisse, die einerseits nicht verursachend sind und zusätzlich 'verursacht' sind, d.h. als Folge eines vorhergehenden, verursachenden Ereignisses entstanden sind. Die Klasse 'verursacht' ist ein Unterfall der Klasse 'nicht verursachend'.

Vorteilhafterweise werden alle Meldungen, ob unmittelbar oder verspätet weitergeleitet, in einem Logfile einer Datenbank gespeichert. Somit können neue Meldungen mit den gespeicherten Meldungen verglichen werden, um zu untersuchen, ob eine bereits ergangene Meldung die Ursache für die aktuell zu bearbeitende Meldung ist. Fall ja, handelt es sich um eine verursachte Meldung, d.h. um eine Meldung, die von einer früheren Meldung bzw. einem durch sie repräsentierten Ereignis verursacht worden ist. In diesem Fall, kann die Meldung gespeichert werden - vorzugsweise als eine Instanz der Objektklasse "verursacht" - , um später mit anderen Meldungen zusammengefaßt weitergeleitet zu werden. Die unmittelbare Weiterleitung dieser Meldung wird erfindungsgemäß unterdrückt, da sie nur als kausale Folge eines vorhergehenden Ereignisses entstanden ist, das bereits gemeldet worden ist und daher keine neue Information für die Aufrechterhaltung des Systems liefert.
Erfindungsgemäß werden ausschließlich die verursachenden Meldungen ohne zeitliche Verzögerung, einzeln an das Operationssystem weitergeleitet, die einen Einfluß auf weitere Ereignisse innerhalb des Netzwerkes haben und somit Folgeereignisse nach sich ziehen.

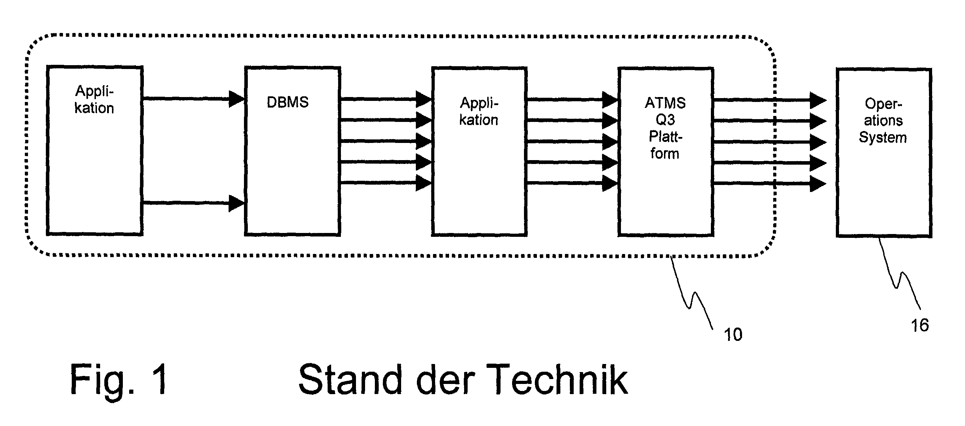

Ein Beispiel für eine Flut von Meldungen, die - nach dem Hauptgedanken der Erfindung - nicht alle unmittelbar weitergeleitet werden müssen (, da sie nicht verursachend sind), kann mit der Eigenschaft der Beinhaltung (containment) und unter Bezugnahme auf Figur 1 beschrieben werden:
Die Beinhaltung macht die Existenz eines Managed Objects von der Existenz eines anderen Managed Object abhängig, das heißt, die Existenz des beinhalteten Objektes ist von der Existenz des beinhaltenden (umfassenden) Objektes abhängig (z.B. kann eine bestimmte Bandbreite nur vorhanden sein, wenn überhaupt ein Übertragungskanal vorhanden ist). Ein Fehler in dem beinhaltenden Objekt wirkt sich automatisch auf das beinhaltete Objekt aus. Die Verwaltungsapplikation veranlaßt in diesem Fall über mehrere, in Figur 1 dargestellte Zwischenstationen (Datenbankmanagementsystem, Applikation, Q3-Plattform) die Meldung eines Fehlers in einem beinhaltenden Objekt an das Operationssystem. Zusätzlich veranlaßt sie bei den bisherigen Verfahren nach dem Stand der Technik für jedes einzelne, beinhaltete Objekt eine entsprechende Meldung über die verschiedenen Zwischenstationen an das Operationssystem. So entsteht aus ursprünglich zwei Meldungen, eine Vielzahl von Nachrichten innerhalb des Netzwerkes und eine Vielzahl von Meldungen an das Operationssystem.

Doch ebenso können bestimmte Beziehungen (relationships) zwischen den Objekten dazu führen, daß nicht-verursachende Ereignisse entstehen, deren Meldung erfindungsgemäß bis zu einem bestimmten Zeitpunkt unterdrückt werden kann. Besteht zwischen zwei Objekten beispielsweise eine wechselseitige Beziehung, so daß jeweils jedes der Managed Objects eine Referenz zu dem anderen umfaßt, dann müssen bei Löschung eines Objektes zwangsläufig alle Verweise auf dieses Objekt ebenfalls gelöscht werden um die Integrität der Referenzierung gewährleisten zu können. Mit dem Löschen der Verweise werden wieder weitere (verursachte) Meldungen geschaffen, die aber für das Operationssystem keinen Informationsgewinn darstellen und somit verzögert und gesammelt mit weiteren Meldungen weitergeleitet werden können.

Die Erfindung sieht deshalb vor, jede Meldung vor der Weiterleitung an das Operationssystem zu analysieren, um zu untersuchen, ob es sich um eine verursachende Meldung handelt, das heißt um eine Meldung, die durch ein verursachendes Ereignis entstanden ist, oder um eine nicht-verursachende Meldung, das heißt um eine Meldung bzw. ein durch sie repräsentiertes Ereignis, das keine weiteren Ereignisse automatisch auslöst. Im letzteren Fall kann die sofortige Meldung der Nachricht unterdrückt werden.

Es wird bevorzugterweise immer unabhängig voneinander untersucht, ob eine Meldung eine verursachende Meldung ist und, ob eine Meldung eine verursachte Meldung ist. Damit können mit dem erfindungsgemäßen Verfahren auch die Fälle abgedeckt werden, bei denen eine Meldung zugleich in beide Kategorien (verursacht - verursachend) klassifiziert werden kann. In diesem Fall wird die Meldung weitergeleitet, da erfindungsgemäß die Instanz 'verusachend' vorrangig bearbeitet wird und eine höhere Priorität hat als die Instanz 'verursacht'.

Zusätzliche, vorteilhafte Ausführungsformen ergeben sich aus den Unteransprüchen.
Das bisherige Vorgehen nach dem Stand der Technik, weitere Vorteile der Erfindung und besondere Ausführungsformen mit deren Merkmalen sind in der nachfolgenden detaillierten Figurenbeschreibung dargestellt.
Darin zeigt:
Fig. 1 eine schematische Darstellung von Meldungen bei einem System aus dem Stand der Technik,
Fig. 2 ein Ablaufdiagramm einer Ausführungsform der vorliegenden Erfindung.

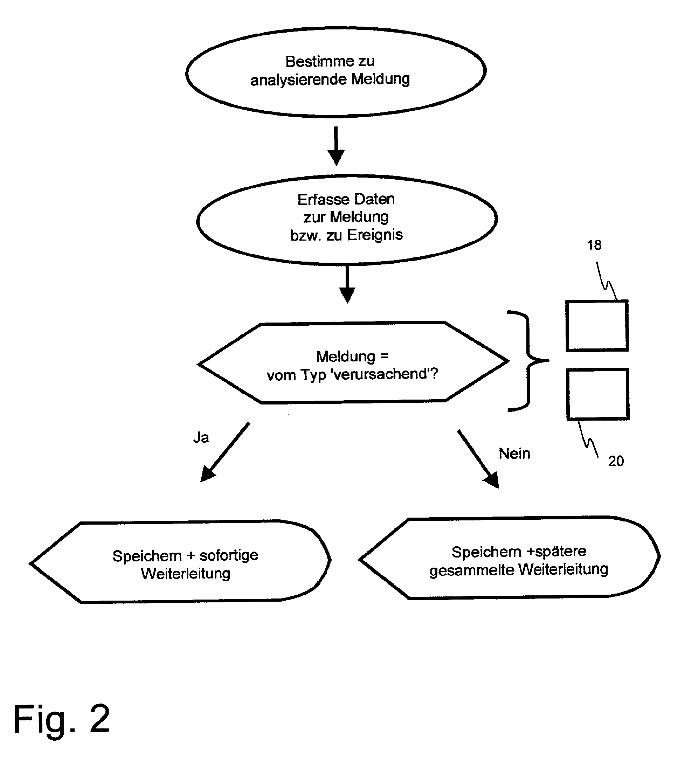

Im folgenden wird einleitend kurz der grundlegende Ablauf des erfindungsgemäßen Verfahrens vorgestellt und anschließend - unter Bezugnahme auf Figur 2 - der Ablauf anhand einer bevorzugten Ausführungsform geschildert.

Ein Netzwerksystem, das nach den ITU-T Prinzipien verwaltet wird, besteht aus Netzelementen 10, die in der Datenmodellierung zu Managed Objects 12 bzw. Objekten 12 abstrahiert sind. Während des Netzbetriebs sendet das Netzelement 10 Meldungen 14, die Ereignisse repräsentieren, an ein Operationssystem 16, damit das Netzwerksystem optimal verwaltet werden kann.

In der bevorzugten Ausführungsform ist das Netz ein ATM Netz, das nach den Prinzipien des TMN verwaltet wird. Die zusätzlichen erfindungsbedingten Komponenten sind in die bestehende TMN Architektur eingebettet und ermöglichen einen Funktionalitätsgewinn im Hinblick auf die Übertragung Meldungen 14, die bestimmte Ereignisse im System repräsentieren. Die Weiterleitung von ausgewählten Meldungen 14 kann unterdrückt werden, so daß diese zu einem späteren Zeitpunkt und zusammen mit anderen Meldungen 14 weitergegeben werden können. Dies bringt den Vorteil, daß das System nicht mit der Verarbeitung von Meldungen 14 überlastet werden kann, die keinen Informationsgewinn für die Aufrechterhaltung des Netzsystembetriebes bringen.

Ein weiterer Vorteil liegt darin, daß in Bezug auf die Datenübertragung Bandbreiten nicht unnötig belegt werden, wie bei den Verfahren nach dem Stand der Technik.

Für die selektive Weiterleitung von Meldungen 14 setzt die Erfindung zwei hauptsächliche Komponenten ein:
- einen MassEventDiscriminator 18 und
- einen MassEventPreprocessor 20.

Der MassEventDiscriminator 18 ist ein Objektmodell in der TMN Architektur und umfaßt eine Objektklasse, die auf Datenmodellierungsebene beschreibt, ob eine Ereignis in eine von zwei Kategorien fällt. Die Kategorien sind:
1. 'verursachend', nämlich dann, wenn das Ereignis automatisch zumindest ein weiteres Ereignis bzw. ein Folgeereignis verursacht und
2. 'nicht verursachend' und in der bevorzugten Ausführungsform der Erfindung wird diese Klasse bzw. Kategorie auf solche, sogenannten 'verursachten' Ereignisse beschränkt, die als Folge eines vorhergehenden verursachenden Ereignisses entstanden sind. Diese Klasse wird als 'verursacht' bezeichnet. Die Klasse 'verursacht' ist mengentheoretisch eine Unterklasse der Klasse 'nicht verursachend'.

Der MassEventPreprocessor 20 ist als Software Komponente ausgebildet und weist eine Schnittstelle zu den Netzwerkelement 10 und dem Operationssystem 16 auf. Funktional ist der MassEventPreprocessor 20 im Hinblick auf die Weiterleitung von Meldungen 14 zwischen das Netzelement 10 und das Operationssystem 16 geschaltet. Es analysiert, um welche Art es sich bei dem zu untersuchenden Ereignis handelt (verursachend oder verursacht - siehe oben) und steuert abhängig von dieser Klassifizierung unterschiedlichen Verfahrensschritte für die Übertragung der jeweiligen Meldung 14 an. Das Verhalten des MassEventPreprocessors 20 wird durch die Daten, insbesondere durch die MassEventData, gesteuert. Der MassEventPreprocessor 20 basiert sozusagen auf dem MassEventDiscriminator 18.

Wie in Figur 2 dargestellt, wird die Meldung 14 gespeichert und sofort und einzeln (wie bisher) an das Operationssystem 16 weitergeleitet, falls das Ereignis von der Art 'verursachend' war.
Andernfalls, also bei einem Ereignis der Art 'verursacht', wird die Meldung als eine Instanz der Objektklasse 'verursacht' gespeichert und später mit anderen Meldungen 14 zusammengefaßt übertragen. Die sofortige Herausgabe der jeweiligen Meldung 14 (, die keine neue Information für das Operationssystem 16 liefert) wird also erfindungsgemäß unterdrückt.

In einer sehr vorteilhaften, alternativen Ausführungsform der Erfindung ist der Teil des Verfahrens, der für die Prüfung verantwortlich ist, ob es sich um ein verursachendes Ereignis handelt oder nicht (dies ist in Figur 2 durch die Komponenten 18 und 20 angedeutet) Teil der Q3 API.

Die Erfindung basiert grundsätzlich auf drei Objekt Klassen für die Modellierung der Daten auf abstrakte Ebene, nämlich:
1. dem MassEventDiscriminator 18,
2. der Klasse 'verursachend', insbesondere einem 'causualEvent' und
3. der Klasse 'verursacht', insbesondere einem 'effectEvent'.

Die Speicherung der Instanzen der ersten Klasse erfolgt bevorzugterweise als semi-permanent in dem Datenbankmanagementsystem, da diese Daten nur selten verändert werden. Hingegen sind die Instanzen der beiden anderen Objektklassen flüchtiger. Doch selbst bei einem Verlust dieser Daten funktioniert das erfindungsgemäße Verfahren vorteilhafterweise einwandfrei, indem mehr Meldungen 14 weitergeleitet werden.

Vorteilhafterweise können mit der erfindungsgemäßen Lösung die Probleme gelöst werden, die durch eine überflüssige Übertragung von Meldungen 14 entstehen, ohne daß die ITU-T-Standards geändert werden müssen. Damit kann das vorliegende Verfahren auf alle bestehenden und zukünftigen TMN Architekturen angewendet werden.

## Patentansprüche

1. Verfahren zur Weiterleitung von zumindest einer Meldung (14), die zumindest ein Ereignis bei der Betriebsführung eines Telekommunikationsnetzwerkes repräsentiert, mit folgenden Schritten:
- Bestimmen der Meldung (14),
- Erfassen von Daten, die die Meldung (14) und / oder das zugehörige Ereignis betreffen,
- Klassifizieren der Meldung (14) aufgrund der erfaßten Daten in zumindest eine der beiden Klassen 'nicht verursachend' und 'verursachend'
- Speichern und selektives Weiterleiten der Meldung (14), indem die Meldung (14) direkt weitergeleitet wird, falls die Meldung (14) in die Klasse 'verursachend' klassifiziert worden ist und indem andernfalls die Meldung (14) zu einem späteren Zeitpunkt weitergeleitet wird.

2. Verfahren nach Anspruch 1,
**dadurch gekennzeichnet, daß**
das selektive Weiterleiten der Meldung (14) automatisch erfolgt.

3. Verfahren nach mindestens einem der vorstehenden Ansprüche,
**dadurch gekennzeichnet, daß**
das Management des Netzwerkes nach den ITU-T Empfehlungen organisiert ist und daß das Netzwerk insbesondere ein TMN System ist.

4. Verfahren nach mindestens einem der vorstehenden Ansprüche,
**dadurch gekennzeichnet, daß**
das Verfahren auf einer Q3-Plattform ausgeführt wird.

5. Verfahren nach mindestens einem der vorstehenden Ansprüche,
**dadurch gekennzeichnet, daß**
die Daten zumindest alle das Ereignis verursachenden Vorgängerereignisse und alle durch das Ereignis verursachten Nachfolgeereignisse zu dem Ereignis umfassen, das durch die Meldung (14) repräsentiert wird.

6. Verfahren nach mindestens einem der vorstehenden Ansprüche,
**dadurch gekennzeichnet, daß**
die Daten erfaßt werden, indem zumindest eine Abfrage einer Datenbank ausgeführt wird, um insbesondere zu bestimmen, ob das Ereignis möglicherweise als verursachendes Ereignis abgelegt ist.

7. Verfahren nach mindestens einem der vorstehenden Ansprüche,
**dadurch gekennzeichnet, daß**
das Ereignis zu der Meldung (14) in die Klasse 'verursachend' klassifiziert wird, wenn das Ereignis zumindest ein anderes Ereignis enthält oder mit zumindest einem anderen Ereignis in einer Beziehung steht.

8. Verfahren nach mindestens einem der vorstehenden Ansprüche,
**dadurch gekennzeichnet, daß**
das Ereignis zu der Meldung (14) in die Klasse 'verursacht' klassifiziert wird, wenn das Ereignis eine Folge von zumindest einem vorhergehenden verursachenden Ereignis war.

9. Verfahren nach mindestens einem der vorstehenden Ansprüche,
**dadurch gekennzeichnet, daß**
jedem Ereignis eineindeutige ein Ereignis-Identifikator zugeordnet wird, der zusammen mit weiteren ereignisspezifischen Parametern in einer Datenbank abgelegt wird.

10. Verfahren nach mindestens einem der vorstehenden Ansprüche,
**dadurch gekennzeichnet, daß**
das Verfahren mit seinen Ergebnissen, insbesondere mit der Klassifikation des Ereignisses in die beiden Klassen protokolliert wird.

11. Verfahren nach mindestens einem der vorstehenden Ansprüche,
**dadurch gekennzeichnet, daß**
der Zeitpunkt zu dem die gesammelten Meldungen (14) weitergeleitet werden zeitabhängig ist und insbesondere zyklisch erfolgt und / oder dynamisch einstellbar ist.

12. Verfahren nach mindestens einem der vorstehenden Ansprüche,
**dadurch gekennzeichnet, daß**
das selektive Weiterleiten der Meldung (14) an automatisch ausgewählte und/oder zu bestimmende Empfänger erfolgt.

13. Verwendung des Verfahrens nach mindestens einem der vorstehenden Ansprüche zum Management eines Netzwerkes nach den ITU-T Standards, indem ausgewählte Meldungen (14) zusammengefaßt und zu einem späteren Zeitpunkt gebündelt weitergeleitet werden.

14. Verwendung des Verfahrens nach mindestens einem der vorstehenden Ansprüche 1 mit 12,
**dadurch gekennzeichnet, daß**
das Verfahren in ein TMN-Managementsystem integriert ist.

15. Netzwerkmanagementsystem, das zur Ausführung des Verfahrens nach zumindest einem der vorstehenden Ansprüche 1 mit 12 bestimmt ist, bestehend aus:
- einer Objektklasse (18), die als Klassifikationseinheit dient und die beschreibt, ob die Meldung (14) in eine Klasse 'verursachend' oder in eine Klasse 'nicht verursachend' klassifiziert werden kann und
- einem Weiterleitungsmittel (20), das zwischen ein Netzwerkelement (10) und ein Operationssystem (16) geschaltet ist und das die Meldung (14) selektiv und nur dann unmittelbar an das Operationssystem (16) weiterleitet, wenn die Meldung (14) bzw. das sie auslösende Ereignis in die Klasse 'verursachend' klassifiziert worden ist.

16. Netzwerkmanagementvorrichtung, die zur Weiterleitung von zumindest einer Meldung (14) von einem Netzwerkelement (10) zu mindestens einem Operationssystem (16) bestimmt ist, wobei die Meldung (14) zumindest ein Ereignis bei der Betriebsführung eines Telekommunikationsnetzwerkes repräsentiert, das nach den ITU-T Richtlinien verwaltet wird, mit:
- einer Objektklasse (18), die als Klassifikationseinheit dient und die beschreibt, ob die Meldung (14) in eine Klasse 'verursachend' oder in eine Klasse 'nicht verursachend' klassifiziert werden kann und
- einem Weiterleitungsmittel (20), das zwischen das Netzwerkelement (10) und das Operationssystem (16) geschaltet ist und das die Meldung (14) selektiv und nur dann unmittelbar an das Operationssystem (16) weiterleitet, wenn die Meldung (14) bzw. das sie auslösende Ereignis in die Klasse 'verursachend' klassifiziert worden ist.
